# EUROPÄISCHE PATENTSCHRIFT

(11) **EP 1 977 209 B1**
(45) Veröffentlichungstag und Bekanntmachung des Hinweises auf die Patenterteilung: **31.03.2010**
(21) Anmeldenummer: 06706365.1
(22) Anmeldetag: 23.01.2006
(51) Int. Cl.: G01M 3/28

(54) **VERFAHREN ZUR PERMANENTEN ÜBERWACHUNG VON FLUIDE MEDIEN FÜHRENDEN, UNTER DRUCK STEHENDEN ROHRLEITUNGEN UND LEITUNGSSYSTEMEN**
METHOD FOR PERMANENTLY MONITORING PRESSURIZED PIPELINES AND LINE SYSTEMS WHICH CARRY FLUID MEDIA
PROCEDE DE SURVEILLANCE PERMANENTE DE CONDUITS TUBULAIRES ET DE SYSTEMES DE CONDUITS QUI TRANSPORTENT DES FLUIDES SOUS PRESSION

(43) Veröffentlichungstag der Anmeldung: 08.10.2008
(73) Patentinhaber: Windisch, Stefan, 55270 Oberolm (DE); Heinl, Alexander, 55124 Mainz (DE)
(72) Erfinder: Windisch, Stefan, 55270 Oberolm (DE); Heinl, Alexander, 55124 Mainz (DE)
(74) Vertreter: Meissner, Bolte & Partner
(86) Internationale Anmeldenummer: PCT/EP2006/000561
(87) Internationale Veröffentlichungsnummer: WO 2007/087819

(56) Entgegenhaltungen:
- WO-A-2005/095916

## Beschreibung

Die Erfindung betrifft ein Verfahren zur permanenten Überwachung von fluide Medien führenden, unter Druck stehenden Rohrleitungen und Leitungssystemen einschließlich angeschlossener Verbraucher, wobei hinter dem Übergabepunkt zwischen Versorgungseinrichtung und Verbraucheranschluß Druckmessungen in verschiedenen Modi durchgeführt werden, um über vorbestimmbare Zeiträume Verbrauchswerte zu ermitteln und auf den Systemzustand zu schlußfolgern, gemäß Oberbegriff des Patentanspruchs 1.

Aus der DE 10 2004 016 378 A1 ist ein Verfahren und eine Anordnung zur aktiven Überwachung von Rohrleitungen vorbekannt. Die zu überwachenden Rohrleitungen führen unter Druck stehende fluide Medien und es sind an der jeweiligen Rohrleitung oder dem Rohrleitungssystem Verbraucher angeschlossen.

Gemäß der vorbekannten Lehre wird mit Hilfe einer zwei Sensoren voraussetzenden Differenzdruckmessung bevorzugt am oder hinter dem Übergabepunkt zwischen Versorgungseinrichtung und Verbraucheranschluß laufend oder in vorgegebenen Zyklen überprüft, ob über einen vorbestimmbaren Zeitraum ein permanenter und nahezu gleichbleibender Verbrauch vorliegt, wobei in diesem Fall auf einen abnormalen Zustand, beispielsweise ein Leck geschlußfolgert wird und eine Alarmauslösung und/oder Absperrung des nachgeordneten Rohrleitungssystems erfolgt.
Bei der dortigen Anordnung ist am oder hinter dem Übergabepunkt zwischen Versorgungseinrichtung und VerbraucheranschluB eine Reihenschaltung aus einem ersten Drucksensor, einem elektrisch oder hydraulisch betätigbaren Ventil und einem zweiten Drucksensor vorgesehen, wobei eine Steuerelektronik mit den Drucksensoren und der Ventilbetätigungseinrichtung verbunden ist, um bei erkanntem Druckabfall pro Zeiteinheit nach gesteuerter Ventilabsperrung ein Fehlersignal bereitzustellen.

Konkret wird gemäß DE 10 2004 016 378 A1 im Leckbestimmungsbetrieb ein am oder hinter dem Übergabepunkt vorgesehenes Ventil geschlossen, so daß das nachgeordnete Rohrleitungssystem kurzzeitig abgesperrt ist. In diesem Zustand wird der momentan vorliegende Eingangsdruck ermittelt und abgespeichert. Hiernach wird der Druckabfall unter Rückgriff auf den abgespeicherten Eingangsdruckwert und den gemessenen Ausgangsdruck bestimmt und es erfolgt eine Überprüfung, ob der bestimmte Druckabfall pro Zeiteinheit einen vorgegebenen Wert überschreitet, woraus auf einen Fehler im Rohrleitungssystem geschlossen werden kann.

Im Zapfbetrieb wird das erwähnte Ventil geöffnet und es erfolgt eine Erfassung von Änderungen der Druckdifferenzen der Druckwerte vor und hinter dem Ventil. Bei sich über einen vorgegebenen Zeitraum nicht mehr ändernden Druckdifferenzwerten erfolgt ein Wechsel der genannten Betriebsmodi. Der Wechsel zwischen Leckbestimmungsbetrieb und Zapfbetrieb wird permanent vorgenommen, wobei der Wechsel in Abhängigkeit von ermittelten Druckschwankungen, verursacht durch Verbraucherzapfstellen, ausgelöst wird. Im Regelfall erfolgt der Wechsel der einzelnen Modi mehrmals innerhalb einer Stunde.

Im Falle des Betriebs von Verbrauchern mit beabsichtigter langer, kontinuierlicher Medienentnahme, z.B. zur Gartenbewässerung, wird ein Volumenstrom variierendes Element eingesetzt, wobei dieses Element die verbraucherbedingte Durchflußrate periodisch oder stochastisch ändert.

Bei dem vorstehend erläuterten Verfahren ist die Blendenwirkung des Ventils und die Auswertung auch der Druckverhältnisse des Eingangsdrucks für die angestrebte Performance nachteilig. Insofern muß das Verfahren und die zugehörige Anordnung für jede Rohrleitungsstruktur, für spezielle Ventile, d.h. für jede Anforderung optimiert werden. Weiterhin sind hohe Anforderungen an das Impulsverhalten der eingesetzten Drucksensoren zu stellen.

Bezüglich bekannter Differenzdruckmessung mit nachgeschalteter Prozessorunterstützter Druckauswertung sei noch auf die DE 197 06 564 A1 verwiesen, wobei dort ein Absperrkommando beim Überschreiten eines vorbestimmten Wasseraustritts ausgelöst wird und also kein spezieller Leckbestimmungsbetrieb erfolgt.

Die DE 198 14 903 C2 offenbart ein Verfahren zum vorbeugenden Absperren einer Versorgungsleitung für ein Medium in Abhängigkeit von den Konsumgewohnheiten der Benutzer und Druckmessungen in den Leitungen.
Konkret wird dort in einer Abschaltphase der Leitungsdruck im abgesperrten Rohrstrang gemessen und bei einem, für den normalen Konsum ungewöhnlichen Druckabfall im Rohrleitungssystem eine Störung signalisiert. In Ausgestaltung soll nicht nur der Druckabfall, sondern auch ein Druckanstieg über dem normalen Niveau ausgewertet werden.

Bei dieser Lösung des Standes der Technik ist es demnach notwendig, Druckverhältnisse zu ermitteln, die auf den üblichen Verbrauch und Konsum abstellen, wobei alle derartigen Druckverhältnisse als Vergleichswerte abgespeichert werden müssen.

Aus dem Vorgenannten ist es daher Aufgabe der Erfindung, ein weiterentwickeltes Verfahren zur Überwachung von fluide Medien führenden, unter Druck stehenden Rohrleitungen und Leitungssystemen einschließlich angeschlossener Verbraucher anzugeben, wobei das Verfahren quasi selbstkalibrierend wirksam werden soll und mit einer minimalen Anzahl von Drucksensoren in der Lage ist, die gewünschten signifikanten Aussagen über die Verhältnisse im Rohrleitungssystem zu gewährleisten. Das Verfahren soll sowohl in Kaltwasser- als auch Warmwassersträngen mit Zirkulation einsetzbar sein und es gestatten, auch sogenannte Mikrolecks zu detektieren.

Die Lösung der Aufgabe der Erfindung erfolgt durch ein Verfahren gemäß Definition nach Patentanspruch 1, wobei die Unteransprüche mindestens zweckmäßige Ausgestaltungen und Weiterbildungen darstellen.

Als erfindungsgemäßer Ansatz zur Lösung der Aufgabe wird die Tatsache genutzt, daß ein sich mehrfach wiederholender Druckabfall innerhalb des zu überwachenden Rohrleitungssystems nach dem Trennen vom Versorger durch Ventilschließung einen Fehler darstellt.

Erfindungsgemäß ist nur das Anordnen eines elektronisch steuerbaren Absperrventils, z.B. eines Magnetventils, hinter dem Übergabepunkt in Verbindung mit einem einzigen Drucksensor in Fließrichtung hinter dem Ventil notwendig. Das Verfahren selbst wird durch eine Steuerelektronik realisiert, wobei die Fehlerauswertung und -bearbeitung vollautomatisch, d.h. programmgestützt vorgenommen wird.

Als Drucksensor ist ein piezoelektrischer Druckaufnehmer mit Stromausgang einsetzbar, wobei das Absperrventil bevorzugt als Magnetventil mit Handhilfsbetätigung ausgeführt ist.

Wenn im Leitungsnetz ein zusätzlicher Warmwasserkreislauf vorgesehen ist, wird dieser ebenfalls mit der Ventil-Sensor-Einheit ausgerüstet.

Nachdem die Anordnung des elektronisch steuerbaren Absperrventils hinter dem Übergabepunkt sowie des Drucksensors in Fließrichtung hinter dem Ventil erfolgte, wird verfahrensseitig zunächst im Sinne einer Inbetriebnahme ein Schließen aller Entnahmestellen mit sich ergebendem Druckaufbau im System durchgeführt. Danach wird das Absperrventil geschlossen und der gegebenenfalls vorhandene Ausgangsdruckabfall bestimmt, und zwar über einen ersten Zeitraum.

Anfangs- und Enddruckwerte werden in einem Speicher abgelegt.

Hiernach erfolgt das Öffnen des Ventils und Einstellen sowie Speichern des Wasserverbrauchs mit der längsten gleichen Flußrate als Abschluß des Inbetriebnahme-Schritts. Dieser Wasserverbrauch mit der längsten gleichen Flußrate kann z.B. dem Füllen einer Badewanne mit Wasser entsprechen.

Nach der Inbetriebnahme wird ein Übergang in den Zapfmodus durch Öffnen des Ventils über einen zweiten Zeitraum vorgenommen.

Nach Abschluß des Zapfmodus erfolgt ein Wechsel in den Lecksuchmodus, und zwar nach Ablauf des zweiten Zeitraums, also dem Zeitraum, der dem Zapfmodus entspricht, durch kurzzeitiges Absperren des Ventils, Bestimmen des Ausgangsdrucks und Speichern dieses Wertes, Errechnen des Druckabfalls während der Ventilsschließungsprozedur und Vergleich mit einem vorgegebenen Festwert.

Hiernach wird eine Überprüfung des Druckabfallwerts aus dem vorangegangenen Vergleichsschritt und Feststellen eines großen Lecks oder eines großen momentanen Verbrauchs sowie Fehlerzwischenspeichern des Ergebnisses realisiert.

Diese Druckabfallmessung wird innerhalb eines recht kurzen Zeitraums wiederholt und es erfolgt ein Vergleich des jetzt erhaltenen Druckabfallwerts mit dem Wert im Fehlerzwischenspeicher sowie Löschen des Fehlerspeichers dann, wenn keine Veränderungen feststellbar sind.

Nach diesem Schritt wird ein Übergang in die erste Stufe eines erweiterten Lecksuchmodus bei weiterhin geschlossenem Ventil durch Vergleich des Druckabfalls in diesem Schritt mit einem vorgegebenen Festwert zur Bestimmung eines eventuell vorliegenden kleineren Lecks vorgenommen. Dieser Fehlerwert wird ebenfalls in einem Speicher abgelegt und es erfolgt eine Wiederholung der Druckabfallmessung innerhalb eines kurzen Zeitraums und Vergleich des jetzt erhaltenen Druckabfalls mit dem Fehlerwert sowie Löschen des Fehlerwerts im Speicher dann, wenn keine Überschreitung des Druckabfallwerts feststellbar war, oder eine Alarm-abgabe bei festgestellter Werteüberschreitung mit anschließendem Übergang in den Zapfmodus.

Nach dem Löschen des Fehlerwerts beginnt eine zweite Stufe des erweiterten Lecksuchmodus bei weiterhin geschlossenem Ventil. Hier wird der momentane Ausgangsdruck ermittelt, der Ausgangsdruckwert wird gespeichert, es erfolgt das Ermitteln eines aktuellen Druckwerts sowie Bestimmung des gegebenenfalls vorliegenden Druckabfalls über einen dritten Zeitraum, der größer als der erste oder zweite Zeitraum ist, und ein Vergleich mit dem ermittelten Ausgangsdruckabfall, um bei Überschreiten auf ein geringfügiges Leck zu Schlußfolgern.

Der Fehlerwert wird dann abgespeichert und gemeldet und es erfolgt ein Übergang in den Zapfmodus oder bei Nichtüberschreiten des Druckabfalls ein Übergang in den Ruhemodus mit geschlossenem Ventil, wobei der Ruhemodus dann beendet wird, wenn eine laufende Druckmessung einen Druckabfall ergibt oder ein Zeitraum abgelaufen ist, welcher größer als der dritte Zeitraum ist, mit dann folgendem Übergang wiederum in den Zapfmodus.

Erfindungsgemäß findet ein permanenter Wechsel von Zapf- und Leckmodus sowie Ruhemodus statt.

Ausgestaltend wird bei mehrfachem Beenden der Lecksuche mit Fehlermeldung die aufsummierte Fehlersumme mit einem Vorgabewert verglichen und bei Überschreiten des Vorgabewerts auf einen signifikanten Systemfehler mit großem Leck geschlußfolgert.

Bei mehrfachem Beenden der erweiterten Lecksuche mit Fehlermeldung wird die aufsummierte Fehlersumme mit einem zweiten Vorgabewert verglichen und beim Überschreiten dieses Vorgabewerts auf ein kleineres Leck im System erkannt.

Im Fehlerfall wird nach entsprechender Vorgabe das Ventil dauerhaft geschlossen.

Bei einer Anordnung der Ventil-Sensor-Einheit in Fließrichtung vor einer Filter- oder Druckregeleinheit besteht die Möglichkeit, netzseitige Überdrücke zu detektieren und gegebenenfalls das angeschlossene Rohrleitungssystem gegen diese Drücke durch Schließen des Ventils zu schützen.

Zusätzliche Temperatursensoren und deren Meßwerte gestatten es, Druckschwankungen aufgrund von Temperaturänderungen des Mediums zu erkennen und bei der Fehlersuche zu eliminieren.

Die Erfindung soll nachstehend anhand eines Ausführungsbeispiels unter Hinweis auf die Flußdiagramme näher erläutert werden.

Die Flußdiagramme zeigen die verschiedenen Betriebsmodi des erfindungsgemäßen Verfahrens, wobei unter Sensor B derjenige im Kaltwasserstrang sowie unter Sensor A der Sensor im Warmwasserstrang zu verstehen ist.

Die Inbetriebnahme erfolgt nach Einschalten der hardwareseitig realisierten Meßvorrichtung, indem der Bediener zunächst aufgefordert wird, das System zu entlüften. Danach sollen alle Wasserentnahmestellen geschlossen werden. Es besteht dann die Möglichkeit, die Dichtheit des jeweiligen Rohrleitungssystems zu überprüfen. Dieser Inbetriebnahmepunkt kann übersprungen werden, wenn das System keine Undichtigkeiten aufweist.

Zur Dichtigkeitsprüfung wird das vorzugsweise eingesetzte Magnetventil geschlossen und der minimale Druckabfall über einen festgelegten Zeitraum, z.B. 150 Sekunden, ermittelt. Ein minimaler Druckabfall kann beispielsweise durch tropfende Wasserhähne oder WC-Spülkästen verursacht sein.

Ebenfalls wird die Dichtigkeit des Warmwassersystems im Arbeitspunkt überprüft, jedoch natürlich nur dann, wenn ein solches Warmwassersystem vorhanden und die Sensorik dort eingebaut ist.

Zur Prüfung des Warmwassersystems wird das Magnetventil im Warmwasserteil geschlossen und der Druckabfall über einen festgelegten Zeitraum ermittelt. Ein Druckabfall ist hier beispielsweise zurückführbar auf eine Abkühlung des Wassers wegen unterbrochener Zirkulation.

Letztendlich erfolgt die Aufforderung zum Einstellen des Wasserverbrauchs mit der längsten Flußrate, z.B. beim Füllen einer Badewanne.

Die nachfolgende Funktionsbeschreibung bezieht sich, wenn nicht anders angegeben, auf den Kaltwasserteil der zu überwachenden Rohrleitungsanlage.

Die verfahrensseitige Handhabung bezogen auf den Warmwasserteil der Anlage ist nur im erweiterten Lecksuchmodus, Teil 2, und im Fehlerbewertungsteil separat erläutert. In allen anderen Modi ist das Warmwasserventil geöffnet und der Drucksensor dient nur zur Bestimmung des momentanen Drucks.

Im Zapfmodus wird das Ventil für einen festgelegten Zeitraum, z.B. für 60 Sekunden, geöffnet. Danach wechselt das System in den Lecksuchmodus.

Der Lecksuchmodus wird durch das Absperren der Wasserversorgung mittels des Magnetventils eingeleitet und es wird der momentane Ausgangsdruck abgespeichert.

Während des Schließens des Ventils wird der Druckabfall, errechnet durch den gespeicherten Ausgangsdruck und den aktuell gemessenen Ausgangsdruck, mit einem Festwert, z.B. 150 mbar, verglichen.

Sollte dieser Druckabfall überschritten werden, ist entweder ein großes Leck im System vorhanden oder ein Verbraucher benötigt gerade an einer Zapfstelle Wasser.

Das erhaltene Ergebnis wird als möglicher großer Fehler des überwachten Systems in einem Fehlerspeicher festgehalten und das System geht wieder in den Zapfmodus über.

Sollte jedoch der Druckabfall innerhalb einer eingestellten kurzen Zeitspanne, z.B. 3 Sekunden, nicht überschritten werden, so wird ein ordnungsgemäßer Zustand festgestellt, der Fehlerspeicher gelöscht und das System geht in den erweiterten Lecksuchbetrieb, Teil 1, über.

Beim erweiterten Lecksuchbetrieb oder Lecksuchmodus, Teil 1, bleibt das Ventil weiterhin geschlossen und der Druckabfall, errechnet durch den gespeicherten Ausgangsdruck und den aktuell gemessen Ausgangsdruck, wird mit einem Festwert, z.B. 150 mbar, verglichen.

Sollte dieser Druckabfall überschritten werden, ist entweder ein kleines Leck im System oder es benötigt ein Verbraucher an einer Zapfstelle Wasser.

Das erhaltene Ergebnis wird als möglicher kleiner Fehler des überwachten Systems im Fehlerspeicher festgehalten und es erfolgt der Übergang zum Zapfmodus.

Sollte der Druckabfall innerhalb einer eingestellten Zeitspanne, z.B. 30 Sekunden, nicht überschritten werden, so wird ein ordnungsgemäßer Zustand festgestellt, der Fehlerspeicherzustand gelöscht und das System geht in den erweiterten Lecksuchbetrieb, Teil 2, über.

Der vorstehende Modus dient dazu, das Setz- bzw. Schließverhalten des Ventils und eventuelle Fluidturbulenzen für nachfolgende Meßschritte und deren Auswertung zu eliminieren.

Beim erweiterten Lecksuchmodus, Teil 2, bleibt das Ventil weiterhin geschlossen und es wird der momentane Ausgangsdruck abgespeichert.

Zusätzlich wird, falls vorhanden, das Warmwasserventil geschlossen und der momentane Ausgangsdruck ebenfalls abgespeichert.

Der Druckabfall, errechnet durch den gerade gespeicherten Ausgangsdruck und den aktuell gemessenen Ausgangsdruck, wird mit dem minimalen Druckabfall pro Zeit (bei der Inbetriebnahme festgelegt, und zwar nach der Dichtigkeitsmessung für Kalt- und Warmwasserteil) verglichen.

Sollte dieser Druckabfall überschritten werden, und zwar im Kalt- oder Warmwasserteil, so ist entweder ein kleines Leck im System vorhanden oder ein Verbraucher benötigt Wasser.

Wenn der Druckabfall im Kaltwasserteil negativ ist, sich also ein Druck aufbaut, z.B. -50 mbar, so wird die Messung nicht erfolgreich abgeschlossen und wiederholt.

Die erkannten Ergebnisse werden als möglicher kleiner Fehler des überwachten Systems im Fehlerspeicher, und zwar für Kaltwasser und Warmwasser separat, festgehalten und das, System geht wieder in den Zapfmodus über.

Wenn der Druckabfall für den Warmwasserteil im Arbeitspunkt innerhalb einer eingestellten Zeitspanne, z.B. 10 Sekunden, nicht überschritten wird, so ist das Warmwasserversorgungssystem als in Ordnung zu befinden, der - Fehlerspeicherstand für Warmwasser wird gelöscht und es wird das Warmwasserventil wieder geöffnet.

Wird der Druckabfall im Kaltwasserteil innerhalb einer eingestellten Zeitspanne, z.B. 150 Sekunden, nicht überschritten, so wird der ordnungsgemäße Zustand festgestellt, der Fehlerspeicherstand gelöscht und das System geht in den Ruhemodus über.

Im Ruhemodus bleibt das Ventil weiterhin geschlossen und der Druckabfall, errechnet durch den gespeicherten Ausgangsdruck und den aktuell gemessenen Ausgangsdruck, wird mit einem Festwert, z.B. 150 mbar, verglichen.

Sollte dieser Druckabfall überschritten werden oder eine Zeitspanne von ca. 30 Minuten abgelaufen sein, wird das System in den Zapfmodus überführt.

Auswerteseitig findet im normalen Betrieb somit ein permanenter Wechsel zwischen dem Zapf-, den verschiedenen Lecksuchmodi und dem Ruhemodus statt. Dies ist jedoch für den Benutzer nicht merkbar, da ein sehr schnelles Umschalten erfolgt und die Druckabfälle beim Ein- und Ausschalten außerordentlich gering sind.

Der Zustand des zu überwachenden Systems liegt ständig aktualisiert in den Fehlerspeichern vor.

Sollte mehrfach die Lecksuche mit einem Fehler als Ergebnis beendet worden sein und die aufsummierte Fehlersumme einen eingestellten Wert überschreiten, so ist von einem großen Fehler innerhalb des überwachten Systems auszugehen.

Sollte mehrfach die erweiterte Lecksuche mit einem Fehler als Ergebnis beendet worden sein und die aufsummierte Fehlersumme einen eingestellten Wert überschreiten, so ist von einer kleinen Leckage innerhalb des überwachten Systems auszugehen.

Im Fehlerfall werden die Magnetventile für Kalt- und eventuell auch Warmwasser je nach Voreinstellung dauerhaft geschlossen bzw. es wird ein Alarm ausgegeben. Die Alarmmeldung kann per Telefon, SMS oder Funksignal an eine Zentrale weitergeleitet werden.

Bei einer Ausführungsform der Erfindung liegt die Ventil-Sensor-Einheit je nach Aufbau des Rohrleitungsnetzes in Flußrichtung vor oder hinter einem Filter oder einer Druckregeleinheit. Wenn das System vor dem Filter /Regler eingebaut ist, besteht die Möglichkeit, netzseitige Überdrücke zu detektieren und durch Absperren die Rohrleitung zu schützen.

Wenn das System nach dem Filter / Regler eingebaut ist, kann es dessen Arbeitsweise überwachen und ebenfalls durch Absperren die Rohrleitung schützen.

Durch den eingebauten Zähler für negative Druckdifferenzen im erweiterten Lecksuchmodus, Teil 2, kann der Zustand eines Rückschlagventils von z.B. einer Warmwasseraufbereitung ermittelt werden.

Der Ausfall der Warmwasseraufbereitung bezüglich der gewünschten Erwärmung des Wassers kann ohne Temperatursensoren über den permanent zu geringen Druckabfall während der Dichtigkeitsmessung bei der erweiterten Lecksuche, Teil 2, Warmwasser in z.B. 10 Sekunden detektiert werden, da die Abkühlungskurve bei kleineren Fluidtemperaturen wesentlich flacher ist.

In erfindungsgemäßer Ausgestaltung ist es möglich, mehrere Ventil-Sensor-Einheiten in Teilsträngen eines Rohrsystems vorzusehen, so daß ein Fehlerfall örtlich leicht eingegrenzt werden kann.

Durch zusätzliche Temperatursensoren kann die Genauigkeit bei großen und/oder schnellen Temperaturschwankungen des fluiden Mediums weiterhin verbessert werden.

Es besteht grundsätzlich die Möglichkeit, den Drucksensor an verschiedenen Stellen hinter dem Ventil anzuordnen. Die Druckmessung des Fluids kann auch indirekt über z.B. Druckausgleichsgefäße oder andere im System vorhandene Mittel bestimmt werden. Selbstverständlich besteht die Möglichkeit, das System und dessen Hard- und Software mit einer integrierten Stromversorgung zu versehen, die auch für einen Speichererhalt bzw. eine Betriebsweise bei Netzausfall Sorge trägt.

Die Erfindung ermöglicht also eine permanente Überwachung von Rohrleitungen und Rohrleitungssystemen hinsichtlich Leckagen unterschiedlicher Art. Alternativ besteht die Möglichkeit der temporären Überprüfung, indem eine entsprechende Sensorik als mobiles Gerät installiert wird und über einen vorbestimmten Zeitraum das angeschlossene Rohrleitungssystem einer Analyse unterzogen wird. Hinsichtlich der Druckmessungen im Kaltwasserund/oder Warmwasserstrang kann über eine Spezifikation der Systemsoftware die Funktion vorhandener Ventile, z.B. von Rückschlagventilen überprüft werden.

Über die Auswertung gemessener Druck- und Temperaturkurven bei vorhandener Temperatursensorik besteht ergänzend die Möglichkeit, Wärmeverluste des die fluiden Medien führenden Rohrleitungssystems zu bestimmen. Letztendlich besteht die erfindungsgemäße Möglichkeit, mit einer zur Realisierung des Verfahrens notwendigen Vorrichtung eine zeitgesteuerte Mengenbegrenzung des Zuflusses fluider Medien über bestimmte Rohrleitungen oder Rohrleitungszweige vorzunehmen. Neben den Kontrollfunktionen wie vorstehend beschrieben, liegt es im Sinn der Erfindung, die abgespeicherten Daten und Fehlerzustände im Sinn einer Dokumentation von Verhältnissen im Rohrleitungssystem zu nutzen, beispielsweise zur Kontrolle notwendiger Aufheizfunktionen in WarmwasserAufbereitungsanlagen zum Zweck der Keimminderung.

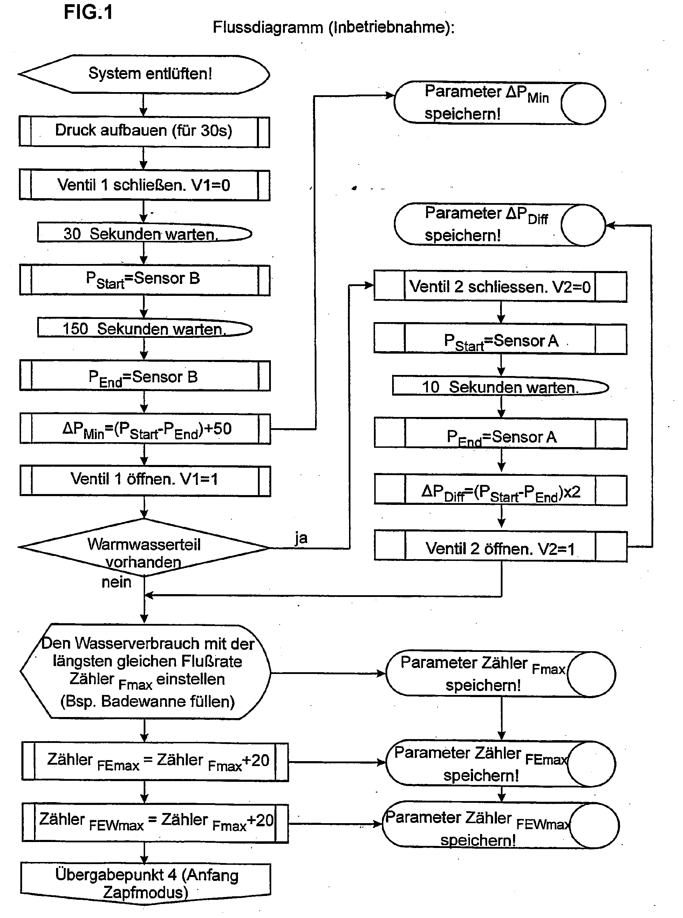

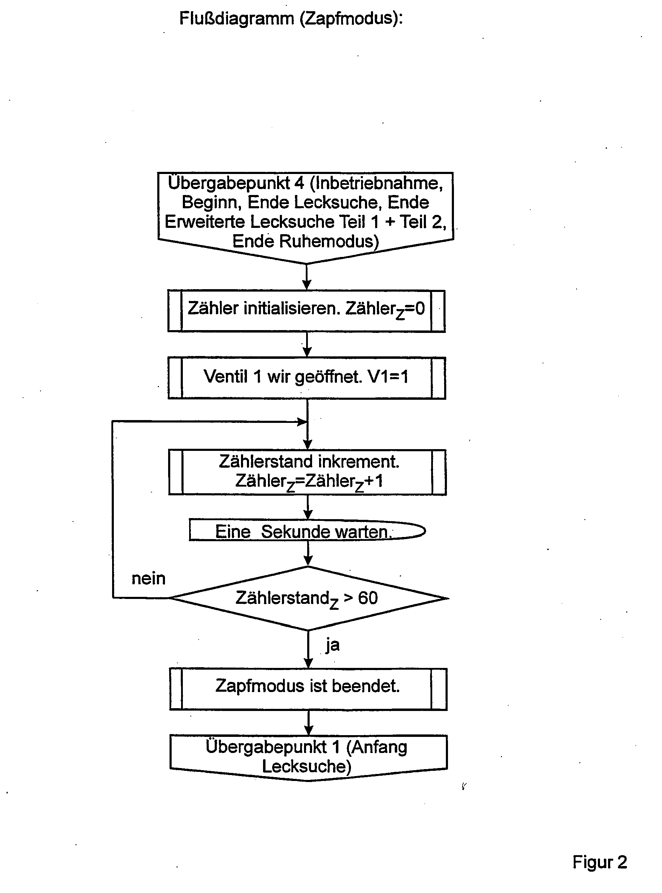

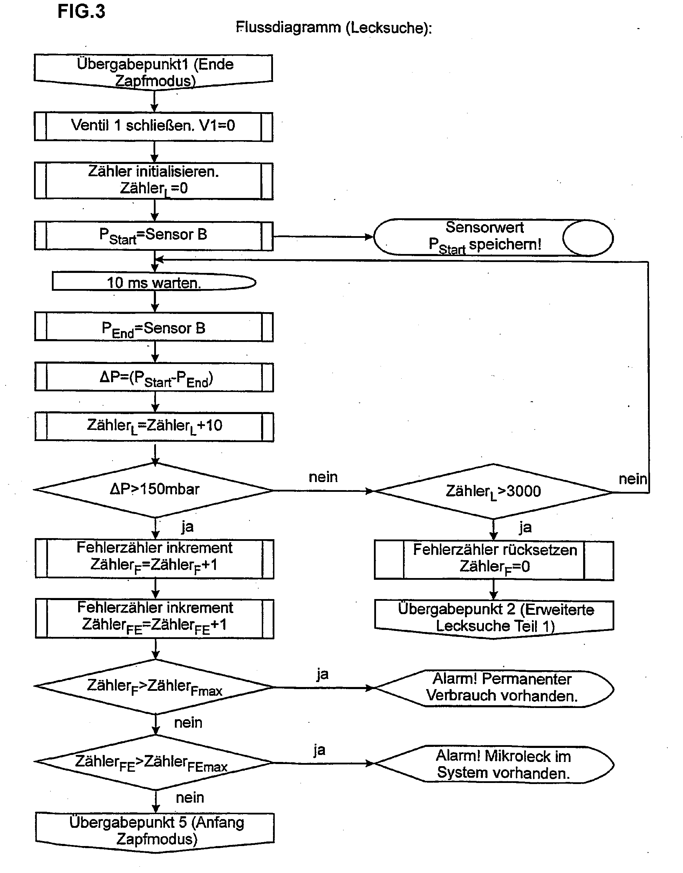

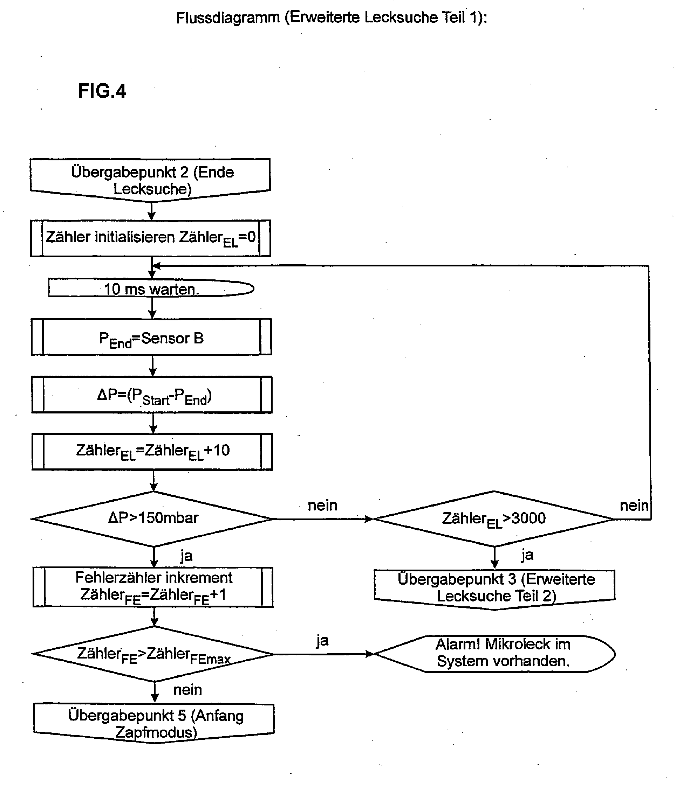

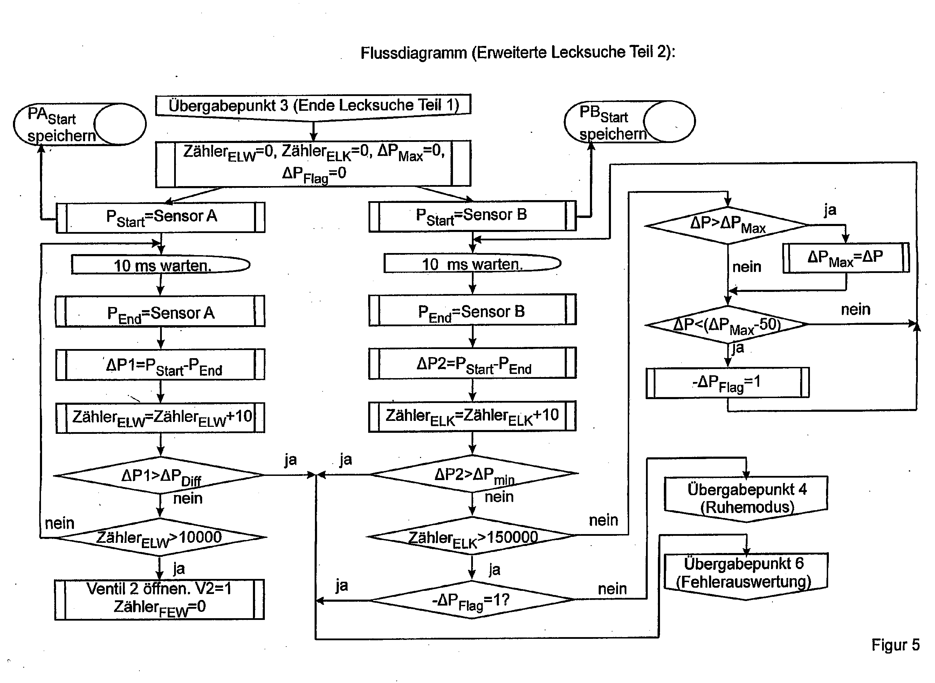

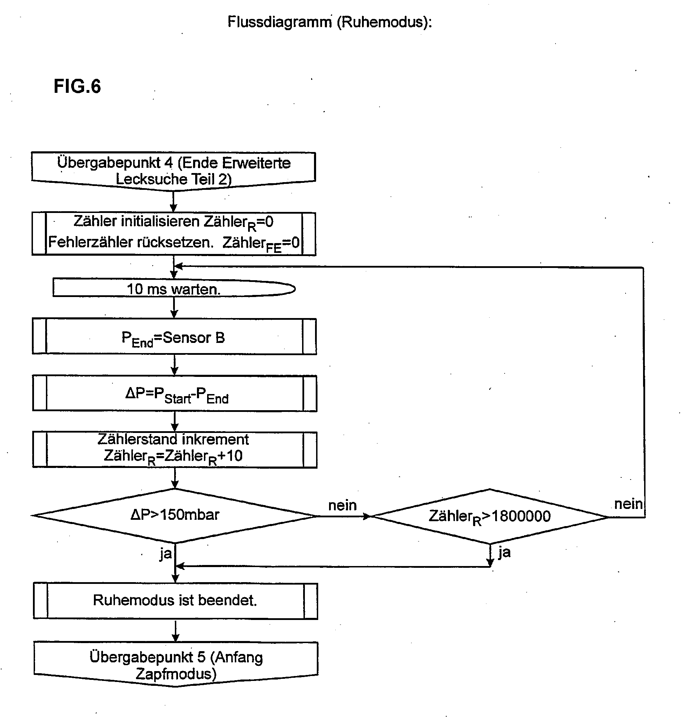

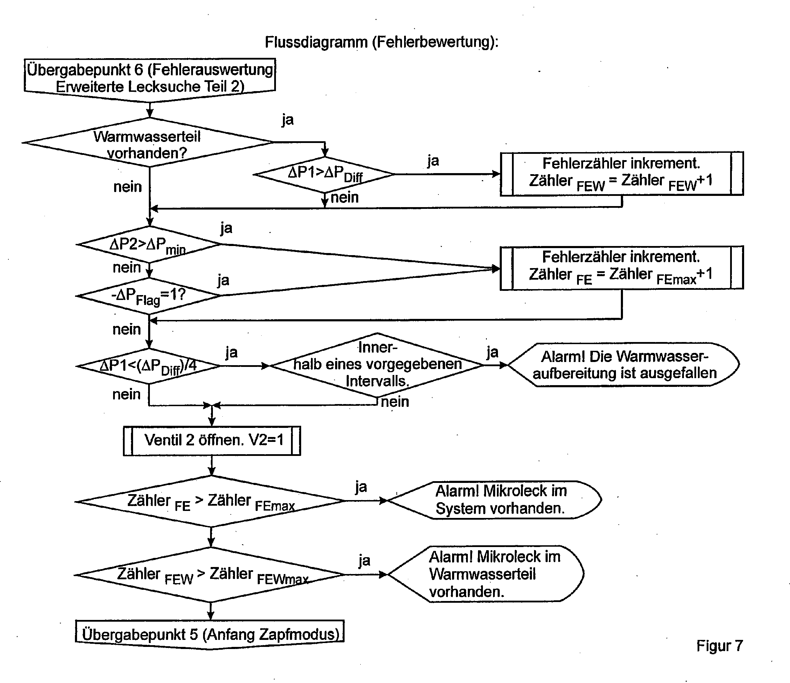

## Patentansprüche

1. Verfahren zur permanenten Überwachung von fluide Medien führenden, unter Druck stehenden Rohrleitungen und Leitungssystemen, einschließlich angeschlossener Verbraucher, wobei hinter dem Übergabepunkt zwischen Versorgungseinrichtung und Verbraucheranschluß Druckmessungen in verschiedenen Modi durchgeführt werden, um über vorbestimmbare Zeiträume Verbrauchswerte zu ermitteln und auf den Systemzustand zu schlußfolgern,
**gekennzeichnet durch** folgende Schritte:
Anordnen eines elektronisch steuerbaren Absperrventils hinter dem Übergabepunkt sowie eines Drucksensors in Fließrichtung hinter dem Ventil; Schließen aller Entnahmestellen und Druckaufbau im System;
Schließen des Absperrventils und Bestimmen eines gegebenenfalls vorhandenen Ausgangsdruckabfalls über einen ersten Zeitraum, Speichern des Anfangs- und Enddruckwerts;
Öffnen des Ventils und Einstellen sowie Speichern des Wasserverbrauchs mit der längsten gleichen Flußrate als Abschluß der Inbetriebnahme;
Übergang in den Zapfmodus **durch** Öffnen des Ventils über einen zweiten Zeitraum;
Wechsel in den Lecksuchmodus nach Ablauf des zweiten Zeitraums **durch** kurzzeitiges Absperren des Ventils, Bestimmen des Ausgangsdrucks und
Speichern dieses Wertes, Errechnen des Druckabfalls während der Ventilschließungsprozedur und Vergleich mit einem vorgegebenen Festwert; Überprüfung des Druckabfallwerts aus dem vorangegangenen Vergleichsschritt und Feststellen eines großen Lecks oder eines großen momentanen Verbrauchs sowie Fehlerzwischenspeichern des Ergebnisses;
Wiederholung der Druckabfallmessung innerhalb eines kurzen Zeitraums und
Vergleich des jetzt erhaltenen Druckabfallwerts mit dem Wert im Fehlerzwischenspeicher sowie Löschen des Fehlerzwischenspeichers dann, wenn keine Veränderungen feststellbar sind;
Übergang in die erste Stufe eines erweiterten Lecksuchmodus bei weiterhin geschlossenem Ventil **durch** Vergleich des Druckabfalls in diesem Schritt mit einem vorgegebenen Festwert zur Bestimmung eines eventuell vorliegenden kleineren Lecks, Abspeichern des Fehlerwerts in einem Speicher, Wiederholung der Druckabfallmessung innerhalb eines kurzen Zeitraums und
Vergleich des jetzt erhaltenen Druckabfalls mit dem Fehlerwert sowie Löschen des Fehlerwerts, wenn keine Überschreitung des Druckabfallwerts feststellbar ist, oder Alarmabgabe bei festgestellter Werteüberschreitung mit anschließendem Übergang in den Zapfmodus;
nach Löschen des Fehlerspeichers Beginn der zweiten Stufe des erweiterten Lecksuchmodus bei weiterhin geschlossenem Ventil, Ermitteln des momentanen Ausgangsdrucks, Speichern dieses Wertes, Ermitteln eines aktuellen Druckwerts sowie Bestimmung des gegebenenfalls vorliegenden Druckabfalls über einen dritten Zeitraum, wobei dieser Zeitraum größer als der erste oder zweite Zeitraum ist, und Vergleich mit dem ermittelten Ausgangsdruckabfall, um beim Überschreiten auf ein geringfügiges Leck zu schlußfolgern;
Abspeichern und Melden des Fehlerwerts sowie Übergang in den Zapfmodus oder bei Nichtüberschreiten des Druckabfalls Übergang in den Ruhemodus mit geschlossenem Ventil, wobei der Ruhemodus dann beendet wird, wenn eine laufende Druckmessung einen Druckabfall ergibt oder ein Zeitraum abgelaufen ist, welcher größer als der dritte Zeitraum ist, mit dann folgendem Übergang in den Zapfmodus.

2. Verfahren nach Anspruch 1,
**gekennzeichnet durch**
einen permanenten Wechsel von Zapf-, Lecksuchmodi und Ruhemodus.

3. Verfahren nach Anspruch 1 oder 2,
**dadurch gekennzeichnet, daß**
bei mehrfachem Beenden der Lecksuche mit Fehlermeldung die aufsummierte Fehlersumme mit einem Vorgabewert verglichen und beim Überschreiten des Vorgabewerts auf einen signifikanten Systemfehler mit großem Leck geschlußfolgert wird.

4. Verfahren nach einem der vorangegangenen Ansprüche,
**dadurch gekennzeichnet, daß**
bei mehrfachem Beenden der erweiterten Lecksuche mit Fehlermeldung die aufsummierte Fehlersumme mit einem weiteren Vorgabewert verglichen und bei Überschreiten dieses weiteren Vorgabewerts auf ein kleineres Leck im System geschlußfolgert wird.

5. Verfahren nach Anspruch 3 oder 4,
**dadurch gekennzeichnet, daß**
im Fehlerfall das Ventil nach Vorgabe dauerhaft geschlossen wird.

6. Verfahren nach einem der vorangegangenen Ansprüche,
**dadurch gekennzeichnet, daß**
bei Anordnung der Ventil-Sensor-Einheit in Fließrichtung vor einer Filter- oder Druckregeleinheit netzseitige Überdrücke detektiert und gegebenenfalls das angeschlossene Rohrleitungssystem gegen diese Drücke durch Schließen des Ventils geschützt wird.

7. Verfahren nach einem der vorangegangenen Ansprüche,
**dadurch gekennzeichnet, daß**
über zusätzliche Temperatursensoren Druckschwankungen aufgrund von Temperaturänderungen des Mediums berücksichtigt werden.

8. Verfahren nach einem der vorangegangenen Ansprüche,
**dadurch gekennzeichnet, daß**
die Ventil-Sensor-Einheit zusätzlich in einem vorhandenen Warmwasserstrang eingesetzt wird.

9. Verfahren nach Anspruch 8,
**dadurch gekennzeichnet, daß**
mit Beginn der zweiten Stufe des erweiterten Lecksuchmodus das Ventil im Warmwasserstrang geschlossen und der diesbezügliche Meß- und Auswertemodus eingeleitet.

## Claims

1. A method for permanently monitoring pressurized piping and line systems, including connected loads, carrying fluid media, with pressure measurements in different modes being carried out downstream of the transfer point between supply device and load connection in order to establish consumption values over predeterminable periods of time and to infer the system state,
**characterized by** the following steps:
arranging an electronically controllable shut-off valve downstream of the transfer point and a pressure sensor downstream of the valve in the direction of flow;
closing all removal points and building pressure in the system;
closing the shut-off valve and, if applicable, determining an outlet pressure drop present over a first period of time, saving the initial and final pressure values; opening the valve and setting, and also saving, the water consumption with the longest unchanging flow rate to complete the start-up procedure;
transitioning into the tapping mode by opening the valve for a second period of time; switching to the leak search mode after the second period of time has elapsed by briefly shutting-off the valve, determining the outlet pressure and saving this value, calculating the pressure drop during the procedure to close the valve and comparing it to a predetermined fixed value;
checking the value of the pressure drop in the preceding comparison step and
determining a large leak or high instantaneous consumption and writing the result to the error buffer;
repeating the pressure drop measurement within a short period of time and
comparing the value of the pressure drop obtained at this point in time to the value in the error buffer, and deleting the error buffer if no change can be determined; transitioning into the first stage of an extended leak search mode with the valve still being closed by comparing the pressure drop in this step to a predetermined fixed value for determining a smaller leak that could be present, writing the error value to a memory, repeating the pressure drop measurement within a short period of time and comparing the value of the pressure drop obtained at this point in time to the error value, and deleting the error value if no excess of the pressure drop value can be determined, or emitting an alarm if an excess value is determined with a subsequent transition into the tapping mode;
initializing the second stage of the extended leak search mode after erasing the error memory with the valve still being closed, establishing the instantaneous outlet pressure, saving this value, establishing a current pressure value and also, if applicable, determining the pressure drop present over a third period of time, this period of time being longer than the first or second period of time, and comparison to the established outlet pressure drop, in order to infer a small leakage in the case of excess;
saving and reporting the error value and also transition into the tapping mode or, in the case of the pressure drop not being exceeded, transition into the rest mode with a closed valve, with the rest mode being terminated when a running pressure measurement reveals a pressure drop, or a period of time has elapsed, which is longer than the third period of time, with a subsequent transition into the tapping mode.

2. The method as claimed in claim 1,
**characterized by**
permanent switching between tapping and leak search modes, and rest mode.

3. The method as claimed in claim 1 or 2,
**characterized in that,**
in the case of multiple terminations of the leak search with an error message, the summed up error value is compared to a preset value and, in the case of it exceeding the preset value, a significant system fault with a large leak is inferred.

4. The method as claimed in one of the preceding claims,
**characterized in that**,
in the case of multiple terminations of the extended leak search with an error message, the summed up error value is compared to a further preset value and, in the case of it exceeding this further preset value, a smaller leak in the system is inferred.

5. The method as claimed in claim 3 or 4,
**characterized in that**,
according to specifications, in the case of a fault the valve is permanently closed.

6. The method as claimed in one of the preceding claims,
**characterized in that**
in the case of arranging the valve-sensor unit upstream in the flow direction of a filter unit or pressure control unit, the valve-sensor unit detects mains-side pressure excesses and, if applicable, the connected piping system is protected against these pressures by closing the valve.

7. The method as claimed in one of the preceding claims,
**characterized in that**
pressure variations due to temperature changes of the medium are taken into account via additional temperature sensors.

8. The method as claimed in one of the preceding claims,
**characterized in that**
the valve-sensor unit is additionally used in a hot-water line that is present.

9. The method as claimed in claim 8,
**characterized in that**
the valve in the hot-water line is closed at the beginning of the second stage of the extended leak search mode and the measurement and evaluation mode related to this is initiated.

## Revendications

1. Procédé pour la surveillance permanente de conduits tubulaires et de systèmes de conduits mis sous pression et véhiculant des milieux fluides, y compris les appareils utilisateurs raccordés, dans lequel on exécute des mesures de pression derrière le point de transmission entre le système d'alimentation et le raccord utilisateur dans différents modes, pour déterminer des valeurs d'utilisation sur des intervalles temporels prédéterminés et tirer des conclusions quant à l'état du système,
**caractérisé par** les étapes suivantes :
on agence une vanne de fermeture à commande électronique derrière le point de transmission ainsi qu'un capteur de pression derrière la vanne en direction d'écoulement ;
on ferme tous les emplacements de soutirage et on laisse la pression s'établir dans le système ;
on ferme la vanne de fermeture et on détermine une chute, éventuellement présente, de la pression de départ sur un premier intervalle temporel, en mémorisant la valeur de pression de départ et la valeur de pression finale ;
on ouvre la vanne et, à titre de terminaison de la mise en service, on établit et on mémorise la consommation d'eau avec le taux d'écoulement constant le plus long ;
on passe au mode de soutirage par ouverture de la vanne sur un second intervalle temporel ;
on passe vers le mode de recherche de fuite après expiration du second intervalle temporel par brève fermeture de la vanne, on détermine la pression de départ et on mémorise cette valeur, on calcule la chute de pression pendant la procédure de fermeture de la vanne et on la compare avec une valeur fixe prédéterminée ;
on vérifie la valeur de chute de pression tirée de l'étape de comparaison précédente et on constate une fuite importante ou une consommation momentanée importante et l'on mémorise le résultat de façon intermédiaire à titre d'erreur ;
on répète la mesure de chute de pression à l'intérieur d'un court intervalle temporel et on compare la valeur de chute de pression obtenue maintenant à la valeur de la mémoire intermédiaire d'erreur, et on efface la mémoire intermédiaire d'erreur lorsqu'on ne constate aucune modification ;
on passe vers la première étape d'un mode de recherche de fuite étendu, tandis que la vanne est toujours fermée, par comparaison de la chute de pression dans cette étape avec une valeur fixe prédéterminée pour déterminer la présence éventuelle d'une petite fuite, on mémorise la valeur d'erreur dans une mémoire, on répète la mesure de chute de pression à l'intérieur d'un court intervalle temporel et on compare la chute de pression maintenant obtenue avec la valeur d'erreur, puis on efface la valeur d'erreur si l'on ne constate aucun dépassement de la valeur de chute de pression, ou bien on déclenche une alarme si l'on constate un dépassement de valeur, avec transition successive dans le mode de soutirage ;
après effacement de la mémoire d'erreur, on commence la seconde étape du mode de recherche de fuite étendue, la vanne restant toujours fermée, on détermine la pression de départ momentanée, on mémorise cette valeur, on détermine une valeur de pression actuelle et on détermine la chute de pression éventuellement présente sur un troisième intervalle temporel, cet intervalle temporel étant plus long que le premier ou le second intervalle temporel, et on compare avec la chute de pression de départ déterminée, pour conclure quant à la présence d'une faible fuite en cas de dépassement ;
on mémorise et on signale la valeur d'erreur, et on passe vers le mode de soutirage ou bien, s'il n'y a pas dépassement de la chute de pression, on passe vers le mode de repos avec vanne fermée, le mode de repos étant terminé si une mesure de pression en cours donne en résultat une chute de pression, ou si un intervalle temporel, plus long que le troisième intervalle temporel, a expiré, et on passe alors successivement vers le mode de soutirage.

2. Procédé selon la revendication 1,
**caractérisé par** un échange permanent du mode de soutirage, du mode de recherche de fuite et du mode de repos.

3. Procédé selon la revendication 1 ou 2,
**caractérisé en ce que**, si l'on termine plusieurs fois la recherche de fuite avec une signalisation d'erreur, la somme d'erreurs additionnées est comparée à une valeur prédéfinie et, en cas de dépassement de la valeur prédéfinie, on en conclut qu'il y a une erreur significative du système avec une fuite importante.

4. Procédé selon l'une des revendications précédentes,
**caractérisé en ce que**, si l'on termine plusieurs fois la recherche de fuite étendue avec une signalisation d'erreur, la somme d'erreurs additionnées est comparée à une autre valeur prédéfinie et, en cas de dépassement de cette autre valeur prédéfinie, on en conclut qu'il y a une faible fuite dans le système.

5. Procédé selon la revendication 3 ou 4,
**caractérisé en ce que**, en cas d'erreur, la vanne est fermée durablement sur instruction.

6. Procédé selon l'une des revendications précédentes,
**caractérisé en ce que**, lors de l'agencement de l'unité vanne-capteur devant une unité à filtre ou une unité de régulation de pression, en direction d'écoulement, on détecte des surpressions du côté du réseau et on protège le cas échéant le système de conduits raccordé à l'encontre de ces pressions par fermeture de la vanne.

7. Procédé selon l'une des revendications précédentes,
**caractérisé en ce que** l'on tient compte de fluctuations de pression en raison de modifications de température du fluide, par des capteurs de température additionnels.

8. Procédé selon l'une des revendications précédentes,
**caractérisé en ce que** l'unité vanne-capteur est mise en place en supplément dans une ligne d'eau chaude existante.

9. Procédé selon la revendication 8,
**caractérisé en ce que**, au commencement de la seconde étape du mode de recherche de fuite étendue, la vanne dans la ligne d'eau chaude est fermée, et le mode de mesure et d'évaluation concerné est démarré.
